# EUROPÄISCHE PATENTSCHRIFT

(11) **EP 2 823 212 B1**
(45) Veröffentlichungstag und Bekanntmachung des Hinweises auf die Patenterteilung: **07.06.2023**
(21) Anmeldenummer: 12818881.0
(22) Anmeldetag: 20.12.2012
(51) Int. Cl.: F16L 55/165, C08J 5/24

(54) **HARZGETRÄNKTER FASERSCHLAUCH ZUR INNENAUSKLEIDUNG VON KANÄLEN UND ROHRLEITUNGEN**
RESIN-IMPREGNATED FIBRE TUBE FOR THE INNER LINING OF DUCTS AND PIPELINES
ENVELOPPE TUBULAIRE FIBREUSE IMPRÉGNÉE DE RÉSINE DESTINÉE À REVÊTIR L'INTÉRIEUR DE CANAUX ET DE CONDUITES

(30) Priorität: 08.03.2012 DE 102012004422
(43) Veröffentlichungstag der Anmeldung: 14.01.2015
(73) Patentinhaber: Brandenburger Liner GmbH & Co. KG, 76829 Landau/Pfalz (DE)
(72) Erfinder: KINZEBACH, Rüdiger, 67125 Dannstadt-Schauernheim (DE)
(74) Vertreter: Kesselhut, Wolf
(86) Internationale Anmeldenummer: PCT/EP2012/005282
(87) Internationale Veröffentlichungsnummer: WO 2013/131544

(56) Entgegenhaltungen:
- WO-A2-2008/062231
- WO-A2-2009/056312
- US-A- 5 017 258
- Burns, Robert: "Polyester Molding Compounds", 12 December 1982 (1982-12-12), Marcel Dekker Inc., New York ISBN: 0-8247-1280-3 pages 69-69,

## Beschreibung

Die Erfindung betrifft einen neuartigen harzgetränkten Faserschlauch zur Innenauskleidung von Kanälen und Rohrleitungen durch Einsatz eines neuartigen chemischen Additives während des Imprägnierens eines Faserschlauchs oder eines Faserbandes mit einem Reaktionsharz. Weiterhin betrifft die vorliegende Erfindung ein Verfahren zur Herstellung eines derartigen harzgetränkten Faserschlauches.

Um zu vermeiden, dass bei der Sanierung von in der Erde verlegten Abwasserkanälen, Wasserleitungen oder anderen Rohrsystemen die gesamte Wegstrecke des Rohrsystems aufgegraben werden muss, wird häufig ein sehr elegantes technisches Verfahren angewandt, nach dem man einen flexiblen, mit einem Reaktionsharz getränkten Faserschlauch in das Rohr einführt, dort üblicherweise mit Druckluft aufbläst und danach das Reaktionsharz aushärtet. Dabei beobachtet man allerdings häufig, dass das flüssige Reaktionsharz aus dem Faserschlauch nach dem Tränken auslaufen oder sich zumindest an der Unterseite des Schlauches ansammeln kann.

In der EP-B 799 397 wird deshalb vorgeschlagen, einen dreilagigen Glasfaserschlauch mit einer Innenlage aus einer voluminösen Fasermatte und zwei Außenlagen aus einem Fasergewebe mit einem niederviskosen Reaktionsharz zu tränken und eine Außenschicht durch UV-Bestrahlung zu gelieren. Die Herstellung eines solchen dreilagigen Faserschlauchs ist aber relativ aufwändig. Darüber hinaus besteht bei einem solchen dreilagigen Faserschlauch das Problem, dass das Harz in der voluminösen Innenlage sich beim Lagern nach unten absetzen kann, was zu einem ungleichmäßigen Imprägnieren des Faserschlauches führt.

In dieser europäischen Patentschrift wird auch eine andere Herstellung eines harzgetränkten Faserschlauches beschrieben, nach der die Viskosität des Reaktionsharzes nach dem Imprägnieren durch Thixotropiermittel oder Eindickmittel erhöht werden sollte, um auf diese Weise das Auslaufen von niedrigviskosen Reaktionsharzanteilen zu vermeiden.

Eine solche Verfahrensweise hat aber den Nachteil, dass die Geschwindigkeit der Imprägnierung erheblich verringert wird und dass die Benetzung der einzelnen Fasern mit dem Reaktionsharz nicht vollständig ist.

Weiterhin beschreibt die WO 2006/061129 ein Verfahren zur Herstellung eines ebenfalls harzgetränkten Faserschlauchs zur Innenauskleidung von Kanälen oder Rohrleitungen durch Imprägnieren mit Hilfe eines Reaktionsharzes, wobei während und nach dem eigentlichen Imprägnierverfahren stets eine bestimmte Viskosität eingestellt werden sollte. Bei diesem Verfahren werden zusätzlich noch Eindickmittel, insbesondere Oxide oder Hydroxide von Erdalkalimetallen sowie gegebenenfalls Thixotropiermittel verwendet. Die dort erwähnten Thixotropiermittel sind Verbindungen der Kieselsäure.

Aus der US 5,017,258 ist es bekannt, einen Auskleidungsschlauch zur Sanierung von Abwasserkanälen zu verwenden, bei dem ein Schlauch aus absorbierendem Polyesterfilz, ein sogenannter Filzliner, mit Epoxidharz getränkt wird, welches nach dem Einziehen des Filzliners in den zu sanierenden Kanal durch Einbringen von Heißwasser oder Heißdampf aushärtet. Hierzu wird das Epoxidharz mit Imidazol vermischt, wodurch das Gemisch unter Wärmeeinwirkung aushärtet, ohne dass eine übermäßig starke exotherme Reaktion erfolgt.

Die WO 2008/062231 beschreibt einen Faserschlauch nach dem Oberbegriff von Anspruch 1 und die Herstellung eines sogenannten "Prepregs", der ein Bogen aus Verbundwerkstoff (composite sheet) ist, welcher Glasfasern enthält, die mit einem ungesättigten thixotropen Polyesterharz getränkt sind, welches ebenfalls einen Fotoinitiator enthalten kann. Dieser Patentanmeldung entnimmt der Fachmann weiterhin, dass der Bogen aus Verbundmaterial ebenfalls Magnesiumoxid als Eindickmittel enthalten kann, um das Harz auf die gewünschte Viskosität einzudicken, sodass der Bogen klebrig wird.

Gegenstand der WO 2009/056312 ist eine Auskleidung von Rohren zur Sanierung von Leistungssystemen nach einem zweistufigen Aushärtungsverfahren. Als Material für die Auskleidung wird ein Polyurethan-Prepolymer bereitgestellt, welches aufgeschmolzen und in das Rohr eingebracht wird, wobei das Polyurethan-Prepolymer unter Druck aushärtet.

Weiterhin ist aus Burns, Robert: "Polyester Molding Compounds", 1982, Marcel Dekker Inc., New York ISBN: 0-8247-1280-3, Seite 69 bekannt, hohe Viskositäten durch Mittel zum Eindicken zu erreichen, wobei Oxide und Hydroxide des Calciums und des Magnesiums verwendet werden.

Um den Fortschritt bei der Aushärtung des harzgetränkten Faserschlauches visuell gut beobachten zu können, ist es wichtig, dass der Faserschlauch möglichst transparent ist. Die bisher bekannten harzgetränkten Faserschläuche weisen aber nicht immer eine gute Transparenz auf. Darüber hinaus ist es wünschenswert, dass die harzgetränkten Faserschläuche eine möglichst hohe Wandstärke besitzen. Bei den Faserschläuchen des Standes der Technik können Wandstärken bis maximal 13 mm erreicht werden. Es ist jedoch für manche Zwecke günstig, Faserschläuche mit einer höheren Wandstärke einsetzen zu können, die nach einem möglichst wenig aufwändigen Verfahren hergestellt werden können.

Ausgehend von den Nachteilen der bisher bekannten Faserschläuche stellt sich daher bei der vorliegenden Erfindung die Aufgabe, einen neuartigen harzgetränkten Faserschlauch zu schaffen, der sich durch eine gute Transparenz und ein gesteigerte Wandstärke auszeichnet. Darüber hinaus besteht die Aufgabe der vorliegenden Erfindung darin, ein möglichst einfaches und schnelles Verfahren zur Herstellung eines solchen Faserschlauches bereit zu stellen.

Diese Aufgabe wird erfindungsgemäß durch einen Faserschlauch mit den Merkmalen von Anspruch 1 sowie durch ein Verfahren mit den Merkmalen von Anspruch 7 und eine Verwendung mit den Merkmalen von Anspruch 9 gelöst.

Der erfindungsgemäße harzgetränkte Faserschlauch zur Innenauskleidung von Kanälen und Rohrleitungen enthält neben gleichartigen oder verschiedenartigen Fasermaterialien wenigstens ein polymeres Reaktionsharz zur Imprägnierung dieser Fasermaterialien sowie mindestens ein chemisches Additiv auf Basis von Harnstoff oder eines chemisch modifizierten Harnstoffes, welches als Thixotropiermittel wirkt.

Der erfindungsgemäße harzgetränkte Faserschlauch weist noch ein Mittel zum Eindicken des Reaktionsharzes auf, wobei ein Oxid oder ein Hydroxid des Magnesiumseingesetzt wird. Als Eindickmittel wird insbesondere Magnesiumoxid verwendet, beispielsweise LUVATOL der Firma Lehmann & Voss.

Der erfindungsgemäße Faserschlauch besteht vorzugsweise aus 40 bis 50 Gewichtsprozent wenigstens eines polymeren Reaktionsharzes, 40 bis 50 Gewichtsprozent gleichartiger oder verschiedenartiger Fasermaterialien, 0 bis 5 Gewichtsprozent eines oder mehrerer Eindickmittel und 0,1 bis 5 Gewichtsprozente des chemischen Additives auf Basis von Harnstoff oder eines chemisch modifizierten Harnstoffs, welches als Thixotropiermittel eingesetzt wird, wobei die Summe der Gewichtsprozente stets 100 % ergibt. Besonders bevorzugte Faserschläuche enthalten 42 bis 49, insbesondere 45 bis 48 Gewichtsprozente wenigstens eine polymeren Reaktionsharzes, 42 bis 49, insbesondere 45 bis 48 Gewichtsprozente gleichartiger oder verschiedenartiger Fasermaterialien, 0,5 bis 4, insbesondere 1 bis 2,5 Gewichtsprozente eines Eindickmittels sowie 0,5 bis 5, insbesondere 0,7 bis 4,5 Gewichtsprozente des chemischen Additives auf Basis von Harnstoff oder eines chemisch modifizierten Harnstoffs. Die Gesamtsumme der einzelnen Gewichtsprozente addiert sich dabei stets zu 100 Gewichtsprozent.

Geeignete polymere Reaktionsharze sind u. a. Lösungen eines ungesättigten Polyesters oder eines Vinylesters in Styrol, Polyacrylate oder Polymethacrylate. Derartige polymere Reaktionsharze umschließen zunächst die einzelnen Fasern der Fasermaterialien und härten anschließend in der Weise aus, dass die Fasern von einem festen polymeren Harz vollständig umschlossen werden. Auf diese Weise wird verhindert, dass reaktive Stoffe aus den Kanälen oder Rohrsystemen die einzelnen Fasern angreifen können.

Die Aushärtung der polymeren Reaktionsharze erfolgt bevorzugt durch Beimischen eines Photoinitiators zum Harz und Bestrahlung mit Licht einer geeigneten Wellenlänge, insbesondere durch UV-Licht einer UV-Lichtquelle, welche mehrere, beispielsweise 2 oder mehr UV-Lampen aufweist, die vorzugsweise in einer Kette hintereinander angeordnet sind. Alternativ kann die Aushärtung des polymeren Reaktionsharzes durch Beimischen eines Peroxidinitiators erfolgen. Bei letzterem wird der Aushärtungsvorgang durch Erhöhen der Temperatur über die Zerfallstemperatur des Peroxids bzw. bei kalthärtenden Reaktions-harzen durch Zusatz eines Beschleunigers ausgelöst.

Die im erfindungsgemäßen Faserschlauch vorliegenden Fasermaterialien können u. a. ein Gewebe, ein Gelege, ein Matte, ein Vlies, beispielsweise ein Nadelvlies oder ein Filz sowie Kombinationen derartiger fasriger Gebilde sein. Die einzelnen Fasern bestehen üblicherweise aus Materialien natürlichen Ursprungs wie beispielsweise aus Holz oder Pflanzenbestandteilen. Darüber hinaus können die verwendeten Fasern aus anorganischen Stoffen wie zum Beispiel aus Glas oder Minerialien bestehen. Weiterhin können die Fasern aus polymeren Kunststoffen wie u. a. aus Polyesterfasern oder Polyamidfasern oder aus Fasern enthaltend Copolymere von geeigneten Monomeren aufgebaut sein.

Der erfindungsgemäße harzgetränkte Faserschlauch weist ferner noch ein chemisches Additiv auf Basis von Harnstoff oder eines chemisch modifizierten Harnstoffs auf. Unter einem modifizierten Harnstoff soll hierbei ein solcher Harnstoff verstanden werden, der an einer oder an beiden Aminofunktionen des Harnstoffmoleküls durch geeignete organische Reste, beispielsweise durch Alkylgruppen oder durch Arylgruppen, substituiert ist. Derartige Alkylgruppen oder Arylgruppen können ihrerseits ebenfalls modifiziert werden. Ein solches chemisches Additiv auf Basis von Harnstoff oder von chemisch modifiziertem Harnstoff wirkt dabei als eine Art Thixotropierungsmittel, welches die Viskosität des harzgetränkten Faserschlauches nach Beendigung der mechanischen Belastung während des Ausdehnens des Faserschlauches wieder erhöht. Ein gut geeignetes chemisches Additiv für den erfindungsgemäßen harzgetränkten Faserschlauch wird u. a. unter dem Handels-namen BYK-LP R 21400 von der Firma BYK-Chemie vertrieben. Dieses Additiv wird üblicherweise in flüssiger Form, vorzugsweise in einem geeigneten Lösungsmittel angeboten und ist damit gut dosierbar. Besonders bevorzugt ist dabei ein Additiv auf Basis eines modifizierten Harnstoffs eines Polyurethans gelöst in N-Methylpyrrolidon, Dimethylsulfoxid oder in N-Ethylpyrrolidon.

Um zu gewährleisten, dass die Fasermaterialien ausreichend mit dem zunächst flüssigen Reaktionsharz getränkt werden, wird bevorzugt nicht zuviel des chemischen Additivs auf Basis von Harnstoff bzw. auf Basis des modifizierten Harnstoffs eingesetzt. Aus diesem Grund empfiehlt es sich, nicht mehr als 5 Gewichtsprozente eines solchen chemischen Additivs bezogen auf die Gesamtmenge des harzgetränkten Faserschlauchs zu verwenden. Die Verwendung eines zusätzlichen Eindickmittels kann zu einer Verschlechterung der Transparenz des harzgetränkten Faserschlauchs führen, falls zu viel Eindickmittel verwendet wird. Es empfiehlt sich daher, den Anteil des Eindickmittels bezogen auf die gesamte Menge des harzgetränkten Faserschlauchs nicht auf mehr als 5 Gewichtsprozente zu erhöhen.

Nach Beendigung des Imprägnierens weist der erfindungsgemäße Faserschlauch eine Viskosität von etwa 50 000 bis 2 000 000 mPa auf. Ein solcher Viskositätsbereich gewährleistet zum einen noch eine ausreichend hohe Fließfähigkeit des Reaktionsharzes während des Aushärtungsvorgangs, wodurch Oberflächendefekte vermieden werden können. Zum anderen ist dieser Viskositätsbereich aber ausreichend hoch, um ein Herausdrücken des Reaktionsharzes aus dem Faserschlauch während des Aufblasens des Faserschlauches mit Druckluft zu verhindern.

Der erfindungsgemäße harzgetränkte Faserschlauch zeichnet sich u. a. durch eine hohe mechanische Stabilität über einen Zeitraum von Jahrzehnten aus. Er verfügt weiterhin über eine erhöhte Transparenz verglichen mit den bisher bekannten harzgetränkten Faserschläuchen, was eine bessere visuelle Kontrolle des Aushärtungsvorganges ermöglicht. Weiterhin kann der erfindungsgemäße Faserschlauch durch Lichthärtung mittels UV-Licht auch mit höheren Wandstärken von bis zu 15 mm hergestellt werden, ohne daß es einer zusätzlichen Beimischung von organischen Peroxiden zum Harz bedarf, wogegen die bisher bekannten Faserschläuche, die durch UV-Licht härtbar sind, nur über Wandstärken von nicht mehr als 13 mm verfügen.

Der erfindungsgemäße Faserschlauch kann sowohl innen als auch außen mit entsprechenden Folien beispielsweise aus Polyethylen oder aus Polypropylen versehen werden, was seine Lagerung verbessert. Zur Sanierung von Abwasserkanälen, Wasserleitungen oder anderen Rohrsystemen wird der erfindungsgemäße Faserschlauch in diese eingezogen, dort üblicherweise mit Druckluft aufgeblasen, so dass er sich an die Innenwand anschmiegt und dann das Reaktionsharz ausgehärtet.

Weiterhin betrifft die vorliegende Erfindung auch ein Verfahren zu Herstellung eines harzgetränkten Faserschlauchs zur Innenauskleidung von Kanälen und Rohrleitungen durch Imprägnieren eines Faserschlauchs mit Hilfe eines Reaktionsharzes. Der eigentliche Imprägniervorgang unter Verwendung eines Reaktionsharzes kann dabei auch bereits bei einem Faserband durchgeführt werden, wobei zunächst das Reaktionsharz auf das Faserband einwirkt. Anschließend wird das Faserband so lange um einen Wickeldorn gewickelt, bis ein entsprechender Faserschlauch entsteht.

Nach dem erfindungsgemäßen Verfahren werden die gleichartigen oder verschiedenartigen Fasermaterialien zunächst mit dem flüssigen Reaktionsharz vorzugsweise bei Temperaturen von 5°C bis 40°C, insbesondere bei Temperaturen von 15°C bis 30°C in der Weise versetzt, dass möglichst viele Fasern vom Reaktionsharz benetzt werden. Anschließend fügt man das chemische Additiv auf Basis von Harnstoff oder eines chemisch modifizierten Harnstoffs vorzugsweise bei Temperaturen von 15°C bis 30°C in flüssiger Form hinzu.

Nach einer bevorzugten Variante des erfindungsgemäßen Verfahrens empfiehlt es sich, dem Gemisch aus Fasermaterialien, flüssigem Reaktionsharz und dem chemischen Additiv auf Basis von Harnstoff zusätzlich noch ein Eindickmittel in Form eines pulverförmigen Feststoffs oder in Form einer in einem flüssigen Trägermaterial dispergierten Paste hinzuzufügen.

Das erfindungsgemäße Verfahren ermöglicht eine deutlich schnellere Herstellung eines Faserschlauchs als nach den bisher bekannten Verfahren.

Die Erfindung wird nachstehend noch durch ein erfindungsgemäßes Beispiel sowie ein Vergleichsbeispiel gemäß dem Stand der Technik näher erläutert.

### Beispiel 1:

1 kg eines Faserbandes bestehend aus 48 Gewichtsprozent Glasfasern und 48 Gewichtsprozente eines Reaktionsharzes wurden bei 5 - 40°C 0,5 - 10 Minuten lang imprägniert. Neben dem Reaktionsharz und den Glasfasern enthielt dieses Gemenge - bezogen auf 100 % - weiterhin 2 Gewichtsprozent Magnesiumoxid (Luvatol EK 30 nV der Firma Lehmann & Voss) als Eindickmittel und 2 Gewichtsprozent Harnstoffverbindung (BYK-LP R 21400 der Firma BYK Chemie), welch letztere als chemisches Additiv oder Zuschlagsstoff bezeichnet werden. Das Eindickmittel und die Harnstoffverbindung ließ man insgesamt 3 - 6 Stunden bei 5 - 40°C auf das Faserband einwirken. Das Faserband wurde anschließend überlappend so lange auf einen Wickeldorn aufgewickelt, bis ein Faserschlauch mit einer Wandstärke von 15mm entstand. Danach wurde der Faserschlauch von Innen her mit Hilfe von UV-Licht (Wellenbereich 300 - 500nm) ausgehärtet.

### Vergleichsbeispiel A:

Das erfindungsgemäße Beispiel 1 wurde entsprechend wiederholt, wobei anstelle der Harnstoffverbindung jetzt die analoge Menge an Kieselsäure (WACKER HDK der Firma Wacker-Chemie) eingesetzt wurde. Das imprägnierte Faserband wurde unter den gleichen Bedingungen wie im erfindungsgemäßen Beispiel 1ausgehärtet.

Ein Vergleich zwischen dem erfindungsgemäßen Beispiel 1 und dem Vergleichsbeispiel A ergab, dass der erfindungsgemäße Faserschlauch eine um mehr als 20 % erhöhte Transparenz für sichtbares Licht und UV-Licht aufwies und zu vollständig durchgehärteten Rohren mit einer Wandstärke von 15 mm verarbeitet werden konnte. Die maximale Wandstärke beim Faserschlauch des Vergleichsbeispiels A betrug nur 13 mm.

Darüber hinaus war es möglich, die Herstellung des erfindungsgemäßen Faserschlauchs innerhalb von etwa 5 bis 6 Stunden durchzuführen, wohingegen der Faserschlauch des Vergleichsbeispiels A etwa zwei Tage lang bearbeitet werden musste.

## Patentansprüche

1. Harzgetränkter Faserschlauch zur Innenauskleidung von Kanälen und Rohrleitungen, enthaltend neben einem Fasermaterial wenigstens ein aushärtbares polymeres Reaktionsharz zum Imprägnieren des Fasermaterials, einen Fotoinitiator zum Aushärten mit UV-Licht, ein Mittel zum Eindicken des Reaktionsharzes sowie mindestens ein chemisches Additiv auf Basis von Harnstoff oder eines chemisch modifizierten Harnstoffs, wobei als Reaktionsharz Lösungen eines Polyesters oder eines Vinylesters in Styrol, Polyacrylate oder Polymethacrylate verwendet werden, wobei das chemische Additiv als Thixotropierungsmittel wirkt, welches dem Reaktionsharz vor dem Benetzen des Fasermaterials hinzugefügt wird, und wobei als Mittel zum Eindicken des Reaktionsharzes ein Oxid oder ein Hydroxid von Magnesium verwendet wird, **dadurch gekennzeichnet, dass** das Fasermaterial ein Faserband ist, welches überlappend zu einem Faserschlauch gewickelt ist, wobei die Wandstärke des Faserschlauchs bis zu 15 mm beträgt.

2. Harzgetränkter Faserschlauch nach Anspruch 1, enthaltend 40 bis 50 Gewichtsprozente wenigstens eines polymeren Reaktionsharzes, 40 bis 50 Gewichtsprozente gleichartiger oder verschiedenartiger Fasermaterialien, 0 bis 5 Gewichtsprozente eines Eindickmittels und 0,1 bis 5 Gewichtsprozente des chemischen Additivs auf Basis von Harnstoff oder von chemisch modifiziertem Harnstoff.

3. Harzgetränkter Faserschlauch nach Anspruch 2, enthaltend 42 bis 49, insbesondere 45 bis 48 Gewichtsprozente wenigstens eines polymeren Reaktionsharzes, 42 bis 49, insbesondere 45 bis 48 Gewichtsprozente gleichartiger oder verschiedenartiger Fasermaterialien, 0,5 bis 4, insbesondere 1 bis 2,5 Gewichtsprozente eines Eindickmittels und 0,5 bis 5, insbesondere 0,7 bis 4,5 Gewichtsprozente des chemischen Additivs auf Basis von Harnstoff oder von chemisch modifiziertem Harnstoff.

4. Harzgetränkter Faserschlauch nach einem der Ansprüche 1 bis 3, wobei als gleichartige oder als verschiedenartige Fasermaterialien Glasfasern verwendet werden.

5. Harzgetränkter Faserschlauch nach einem der Ansprüche 1 bis 4, wobei die gleichartigen oder verschiedenartigen Fasermaterialien in Form eines Geleges und/oder Gewebes und/oder Vlieses eingesetzt werden.

6. Harzgetränkter Faserschlauch nach einem der Ansprüche 1 bis 5, wobei als chemisches Additiv auf Basis von Harnstoff ein modifizierter Harnstoff eines Polyurethans gelöst in N-Methylpyrolidon oder Dimethylsulfoxid oder N-Ethylpyrrolidon eingesetzt wird.

7. Verfahren zur Herstellung eines harzgetränkten Faserschlauches gemäß einem der Ansprüche 1 bis 6, wobei das Fasermaterial ein Faserband ist, das mit einem flüssigen Reaktionsharz, welches einen Fotoinitiator enthält, bei Temperaturen von 5°C bis 40°C, insbesondere bei Temperaturen von 15°C bis 30°C in der Weise versetzt wird, dass möglichst viele Fasern vom Reaktionsharz benetzt werden, und dem Reaktionsharz vor dem Benetzen des Fasermaterials das chemische Additiv auf Basis von Harnstoff oder von chemisch modifiziertem Harnstoff bei Temperaturen von 15°C bis 30°C hinzugefügt wird, wobei das Faserband überlappend zu einem Faserschlauch gewickelt wird, wobei die Wandstärke des Faserschlauchs bis zu 15 mm beträgt, und der harzgetränkte Faserschlauch im Anschluss an das Benetzen der Fasermaterialien von innen her durch UV-Licht ausgehärtet wird.

8. Verfahren nach Anspruch 7, wobei dem Gemisch aus Fasermaterial, flüssigem Reaktionsharz und dem chemischen Additiv zusätzlich noch ein Eindickmittel, vorzugsweise in Form eines pulverfönnigen Feststoffs oder in Form einer in einem flüssigen Trägermaterial dispergierten Paste, hinzugefügt wird.

9. Verwendung von modifiziertem Harnstoff als Thixotropiermittel in einem Reaktionsharz bei der Herstellung eines mit dem Reaktionsharz getränkten, überlappend zu einem Faserschlauch gewickelten Faserbandes, wobei die Wandstärke des Faserschlauchs bis zu 15 mm beträgt, gemäß einem der Ansprüche 1 bis 6, wobei das Reaktionsharz einen Fotoinitiator sowie ein Eindickmittel enthält, und als Reaktionsharz Lösungen eines Polyesters oder eines Vinylesters in Styrol, Polyacrylate oder Polymethacrylate verwendet werden.

## Claims

1. Resin-saturated flexible fibrous tube for the internal lining of conduits and pipelines, comprising a fibre material plus at least one curable polymeric reactive resin for impregnating the fibre material, a photoinitiator for curing with UV light, an agent for thickening the reactive resin, and at least one chemical additive based on urea or on a chemically modified urea, where the reactive resin used comprises solutions of a polyester or of a vinyl ester in styrene, polyacrylates or polymethacrylates, where the chemical additive acts as a thixotropy agent which is added to the reactive resin before the wetting of the fibre material, and where the agent used for thickening the reactive resin comprises an oxide or a hydroxide of magnesium, **characterized in that** the fibre material is a fibre tape which is overlap-wound to form a flexible fibrous tube, the wall thickness of the flexible fibrous tube being up to 15 mm.

2. Resin-saturated flexible fibrous tube according to Claim 1, containing 40 to 50 weight per cent of at least one polymeric reactive resin, 40 to 50 weight per cent of fibre materials of the same kind or different kinds, 0 to 5 weight per cent of a thickener and 0.1 to 5 weight per cent of the chemical additive based on urea or on chemically modified urea.

3. Resin-saturated flexible fibrous tube according to Claim 2, containing 42 to 49, more particularly 45 to 48 weight per cent of at least one polymeric reactive resin, 42 to 49, more particularly 45 to 48 weight per cent of fibre materials of the same kind or different kinds, 0.5 to 4, more particularly 1 to 2.5 weight per cent of a thickener and 0.5 to 5, more particularly 0.7 to 4.5 weight per cent of the chemical additive based on urea or on chemically modified urea.

4. Resin-saturated flexible fibrous tube according to any of Claims 1 to 3, wherein fibre materials of the same kind or different kinds that are used are glass fibres.

5. Resin-saturated flexible fibrous tube according to any of Claims 1 to 4, wherein the fibre materials of the same kind or different kinds are used in the form of a laid fabric and/or woven fabric and/or nonwoven fabric.

6. Resin-saturated flexible fibrous tube according to any of Claims 1 to 5, wherein the chemical additive based on urea used is a modified urea of a polyurethane in solution in N-methylpyrrolidone or dimethyl sulfoxide or N-ethylpyrrolidone.

7. Method for producing a resin-saturated flexible fibrous tube according to any of Claims 1 to 6, where the fibre material is a fibre tape to which a liquid reactive resin which comprises a photoinitiator is added at temperatures of 5°C to 40°C, more particularly at temperatures of 15°C to 30°C, in such a way that as many fibres as possible are wetted by the reactive resin, and before the wetting of the fibre material the chemical additive based on urea or on chemically modified urea is added to the reactive resin at temperatures of 15°C to 30°C, where the fibre tape is overlap-wound to form a flexible fibrous tube, the wall thickness of the flexible fibrous tube being up to 15 mm, and, following the wetting of the fibre materials, the resin-saturated flexible fibrous tube is cured from the inside by UV light.

8. Method according to Claim 7, where additionally a thickener, preferably in the form of a pulverulent solid or in the form of a paste in dispersion in a liquid vehicle, is added to the mixture of fibre material, liquid reactive resin and the chemical additive.

9. Use of modified urea as a thixotropic agent in a reactive resin in the production of a fibre tape saturated with the reactive resin and overlap-wound to form a flexible fibrous tube, the wall thickness of the flexible fibrous tube being up to 15 mm, according to any of Claims 1 to 6, where the reactive resin comprises a photoinitiator and a thickener, and the reactive resin used comprises solutions of a polyester or of a vinyl ester in styrene, polyacrylates or polymethacrylates.

## Revendications

1. Tuyau fibreux imprégné de résine pour le revêtement intérieur de canaux et de conduites, contenant outre un matériau fibreux au moins une résine de réaction polymérique durcissable pour l'imprégnation du matériau fibreux, un photoinitiateur pour le durcissement avec de la lumière UV, un agent pour l'épaississement de la résine de réaction ainsi qu'au moins un additif chimique à base d'urée ou d'une urée chimiquement modifiée, des solutions d'un polyester ou d'un ester vinylique dans du styrène, des polyacrylates ou des polyméthacrylates étant utilisé(e)s en tant que résine de réaction, l'additif chimique agissant comme agent thixotrope, qui est ajouté à la résine de réaction avant la réticulation du matériau fibreux, et un oxyde ou un hydroxyde de magnésium étant utilisé en tant qu'agent d'épaississement de la résine de réaction, **caractérisé en ce que** le matériau fibreux est une bande de fibres qui est enroulée en se chevauchant pour donner un tuyau fibreux, l'épaisseur de paroi du tuyau fibreux allant jusqu'à 15 mm.

2. Tuyau fibreux imprégné de résine selon la revendication 1, contenant 40 à 50 % en poids d'au moins une résine de réaction polymérique, 40 à 50 % en poids de matériaux fibreux du même type ou de types différents, 0 à 5 % en poids d'un agent épaississant et 0,1 à 5 % en poids de l'additif chimique à base d'urée ou d'urée chimiquement modifiée.

3. Tuyau fibreux imprégné de résine selon la revendication 2, contenant 42 à 49, en particulier 45 à 48 % en poids d'au moins une résine de réaction polymérique, 42 à 49, en particulier 45 à 48 % en poids de matériaux fibreux du même type ou de types différents, 0,5 à 4, en particulier 1 à 2,5 % en poids d'un agent épaississant et 0,5 à 5, en particulier 0,7 à 4,5 % en poids de l'additif chimique à base d'urée ou d'urée chimiquement modifiée.

4. Tuyau fibreux imprégné de résine selon l'une quelconque des revendications 1 à 3, des fibres de verre étant utilisées en tant que matériaux fibreux du même type ou de types différents.

5. Tuyau fibreux imprégné de résine selon l'une quelconque des revendications 1 à 4, les matériaux fibreux du même type ou de types différents étant utilisés sous forme d'une nappe et/ou d'un tissu et/ou d'un non-tissé.

6. Tuyau fibreux imprégné de résine selon l'une quelconque des revendications 1 à 5, une urée modifiée d'un polyuréthane dissous dans de la N-méthylpyrrolidone ou du diméthylsulfoxyde ou de la N-éthylpyrrolidone étant utilisée comme additif chimique à base d'urée.

7. Procédé de préparation d'un tuyau fibreux imprégné de résine selon l'une quelconque des revendications 1 à 6, le matériau fibreux étant une bande de fibres qui est mise à réagir avec une résine de réaction liquide, qui contient un photoinitiateur, à des températures de 5 °C à 40 °C, en particulier à des températures de 15 °C à 30 °C de telle manière que le plus possible de fibres soient réticulées par la résine de réaction, et l'additif chimique à base d'urée ou d'urée chimiquement modifiée est ajouté, à des températures de 15 °C à 30 °C, à la résine de réaction avant la réticulation du matériau fibreux, la bande de fibres étant enroulée en se chevauchant pour donner un tuyau fibreux, l'épaisseur de paroi du tuyau fibreux allant jusqu'à 15 mm, et le tuyau fibreux imprégné de résine étant durci par de la lumière UV depuis l'intérieur à la suite de la réticulation des matériaux fibreux.

8. Procédé selon la revendication 7, encore un agent épaississant, de préférence sous la forme d'un matériau pulvérulent ou sous la forme d'une pâte dispersée dans un matériau de support liquide, étant de plus ajouté au mélange composé de matériau fibreux, de résine de réaction liquide et de l'additif chimique.

9. Utilisation d'urée modifiée en tant qu'agent thixotrope dans une résine de réaction lors de la préparation d'une bande de fibres imprégnée par la résine de réaction, enroulée en se chevauchant pour donner un tuyau fibreux, l'épaisseur de paroi du tuyau fibreux allant jusqu'à 15 mm, selon l'une quelconque des revendications 1 à 6, la résine de réaction contenant un photoinitiateur ainsi qu'un agent épaississant, et des solutions d'un polyester ou d'un ester vinylique dans du styrène, des polyacrylates ou des polyméthacrylates étant utilisées en tant que résine de réaction.
